(19) Europäisches Patentamt
European Patent Office
Office européen des brevets

(11) **EP 2 735 852 A1**

(12) **EUROPEAN PATENT APPLICATION**

(43) Date of publication:
28.05.2014 Bulletin 2014/22

(51) Int Cl.:
**G01F 25/00** (2006.01)     **G01F 1/58** (2006.01)
**G01F 1/60** (2006.01)

(21) Application number: **12194283.3**

(22) Date of filing: **26.11.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Endress + Hauser Flowtec AG**
**4153 Reinach/BL (CH)**

(72) Inventors:
• **Scherrer, Rémy**
**68960 Oberdorf (FR)**

• **Flecken, Peter**
**79539 Lörrach (DE)**
• **Tschambser, Florent**
**68250 Grundolsheim (FR)**

(74) Representative: **Andres, Angelika Maria**
**Endress+Hauser (Deutschland) AG+Co. KG**
**PatServe**
**Colmarer Strasse 6**
**79576 Weil am Rhein (DE)**

(54) **Scalable and continuous auto-zeroing method for AC driven magneto-inductive flowmeters**

(57)     An AC-driven electromagnetic flow meter having at least one field generating coil and potential sensing electrodes, wherein the AC-driven electromagnetic flow meter comprises control device adapted to drive the AC-driven electromagnetic flow meter with a multiple frequency driving system for driving of the field generating coil.

Magneto-Inductive Flowmeter basic model

fig. 2: behavioural block diagram of a MIF driven with a current source

**EP 2 735 852 A1**

**Description**

Magneto-inductive flow measurement is well established since the 1970's in most industrial plants. It is well suited for conductive fluids since it makes use of Faraday's law to produce an electrode voltage proportionnal to the spatial average velocity Q of the medium.

At early times, the magnetic flux density $\vec{B}$ was AC driven, but soon, due to perturbation rejection and zeroing problems, the switched DC method was commonly prefered.

The main problem of the AC method lies in the presence of a volatile quadrature component due to auto-induction produced by the variable magnetic induction $\vec{B}$ thru the pick-up circuit (effect known as "transformer effect"). Another undesirable effect is due to self-induced eddy currents (Foucault currents) in the $\vec{B}$ generating coil.

The voltage U currently measured at the electrodes is:

$$U = K_f.B.Q + K_q.\frac{dB}{dt} + N \quad (1.1)$$

with:

B: average magnetic induction strength over the tube cross-section ($\vec{B}$ is considered constant and transversal)
Q: average flow velocity to be measured,
Kf: proportionnal factor for the Faraday effect,
Kq: proportionnal factor for the parasitic quadrature effect.
N: perturbation process (noise, low frequent electrode polarization, in/out coupling, etc...)

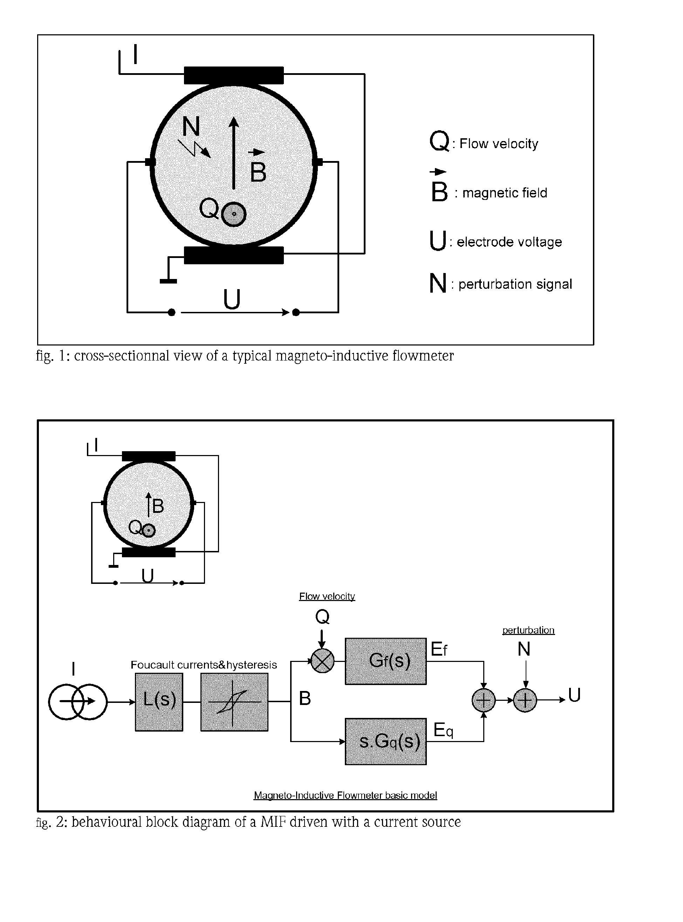

Fig. 1 gives a pipe cross-sectionnal view of the flowmeter arrangement.

Whereas Kf is rather well defined and satisfyingly calibrated, Kq is mainly dependant on geometrical shapes of the pick-up circuit wires, diffuse circuit distribution within the metered medium and conductivity of the said medium. Hence it is more difficult to evaluate and stabilize; a calibrated compensation is rather unaccurate and subject to strong drifts.

From expression (1.1), it appears clearly that the quadrature effect as well as the $\dfrac{dB}{dt}$ dependant Foucault currents are eliminated when the induction B is maintained constant; this is the reason for the choice of a DC field in conventionnal magneto-inductive flowmeters (MIF). The fact of alternating the sign of the field ("switched DC") enables an elegant low frequent perturbation elimination.

This aspect brought the success of switched DC MIFs. However, since the B field polarity is inverted at a certain rate (typically 100ms period), a reliable flow velocity measurement can only occur once the field is settled (DC) on each polarization phase. This low bandwidth, coupled to some hysteresis effects and the need to use relative high voltages, makes the realization of switched DC flowmeters somewhat difficult and strong know-how is necessary to produce high quality devices.

As stated, switched DC MIFs are high-end devices offering up to 0.1% accuracy. As the spectrum of application of MIFs may become larger, e.g in the water treatement area, an increasing demand for medium-class, cheaper and energy saving devices arises.

To this extend, AC driven MIFs could offer an interesting alternative, and, additionnally, due to typical quadrature demodulation means to extract the flow information (see section 3), the signal processing method becomes close to that of Coriolis Flow measurement. This opens the road to a joint electronic sense amplifier.

The object of the invention is to present an AC driven magneto-inductive flow measurement method with a scalable non-invasive continuous auto-zeroing.
It is scalable in the quality of the zero compensation by enabling more or less complexity in the resolution of the problem. In the most advanced form, it is capable of hysteresis/eddy currents drift compensation by means of identification techniques.
It is continuous and non-invasive since the current flow measurement is not influenced. Of course, this auto-zeroing may also be invoked only on demand or only activated periodically (e.g once daily).

The block diagram of a MIF is depicted in fig. 2 and is used as schematical reference in following descriptions.

The coil is driven by a current source I. In prior art AC driven systems, I is generally a single sinusoidal waveform with a given frequency and amplitude but, as in US6962087, multi-frequency systems are sometimes used as well.

The role of the coil is to generate the induction field B; the relation between I and B is ideally a proportionnal factor, but in reality it is subject to a lowpass process L(s) and a certain amount of magnetic hysteresis in conjonction with undesired eddy (or Foucault) currents when the field is variable. The induction B, crossed by the conductive medium at flow velocity Q generates the meter voltage Ef through the Faraday effect. When B is variable, its time derivative dB/dt induces an additionnal parasitic quadrature voltage Eq.

The flow measurement becomes very unaccurate in case of strong drifts, and state of the art systems only solve the problem partially.

The main idea behind the invention is to use a multiple frequency driving system and to take advantage of the phase drift relationships over these frequencies to compute an adequate demodulation phase compensation.

This multiple frequency driving system may be implemented in a simultaneous or sequential manner; in what follows the simultaneous mode is considered.

In this section, a brief study on the effect of the magnetic hysteresis (coupled to Foucault currents) on the I /B characteristic is proposed. Also, a modelization in harmonic mode is presented; this behavioural model is used in advanced autozeroing mode to compensate for hysteresis deviations.

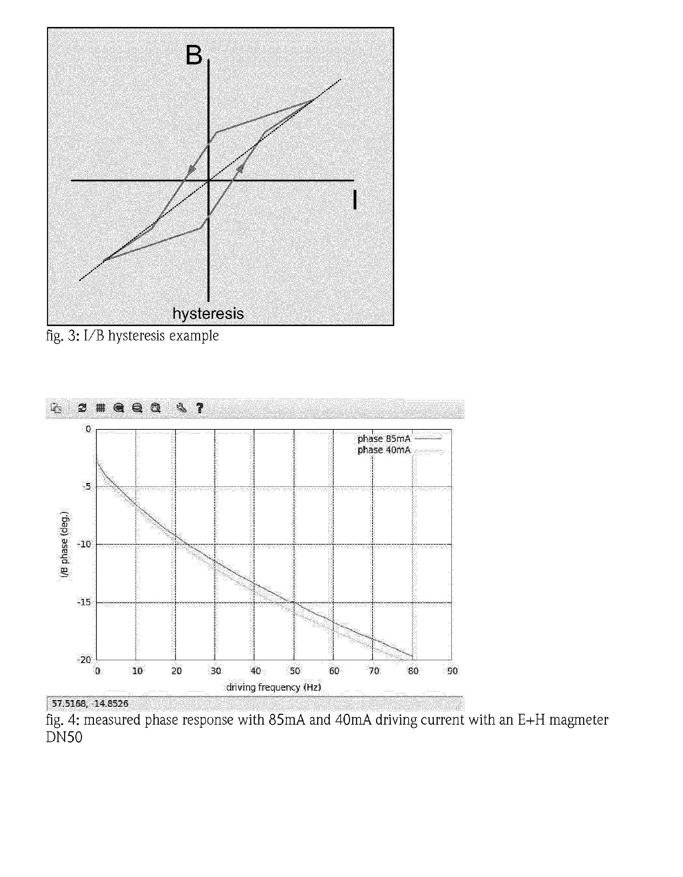

First, a given sinusoidal driving current $I(t) = I.\cos\omega t$ (3.1.1) is considered.
The amplitude $I$ and the frequency $\omega$ are fixed and maintained constant. Point (I,B) then evoluates cyclicly on a given hysteresis path as shown on fig. 3 .

The shape of this hysteresis depends on the frequency, the amplitude and the reaction of eddy currents and is very difficult to predict; a direct modelization is out of the present scope.

Alternatively, a system-theoretical behavioural model is seeked to characterize the I/B behaviour in case of single or multiple frequency driving mode.

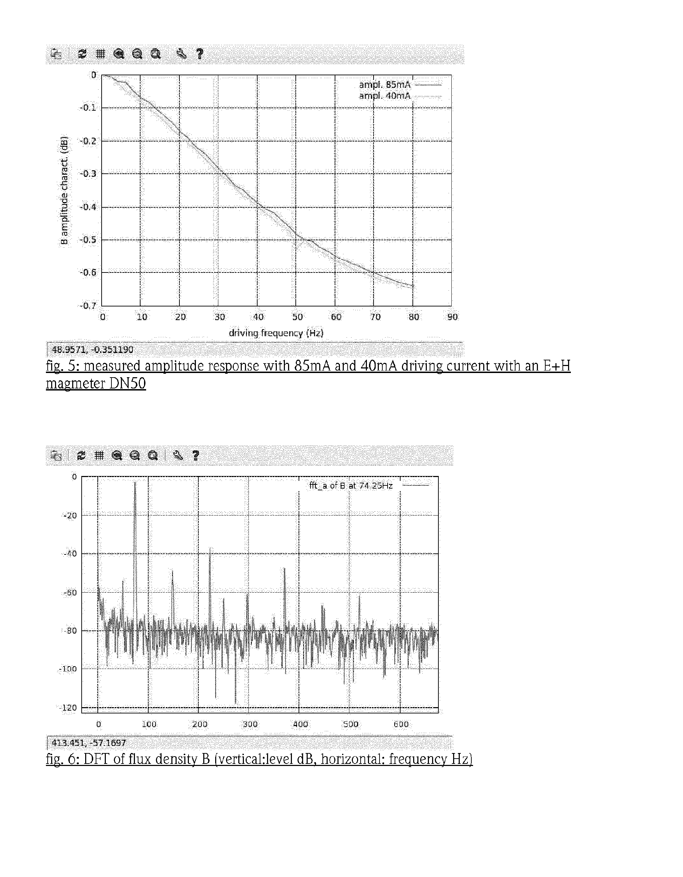

We start with typical I/B characteristics from fig. 4 and fig. 5 measured on real MIFs. Various frequencies with a fixed amplitude I are successively applied and the corresponding induction B fundamental wave measured by quadrature demodulation. One can see that the frequency characteristic slightly depends on the applied amplitude, whereas its shape remains widely unchanged. The amplitude is subject to a damping and the phase evolves as a superposition of a constant phase, a non-linear phase and linear phase (group delay).

The constant phase is mainly due to the hysteresis and both other effects to self-induced eddy currents.

Fig. 6 shows an DFT of the B response to a single frequency excitation: the harmonics confirm the non-linear behaviour of the I/B characteristic.

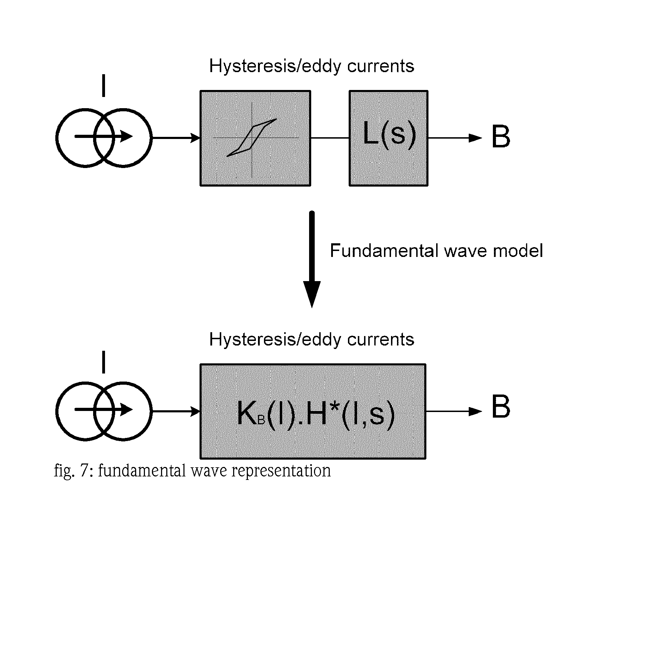

From the non-linear aspects developped above, the system may be represented in its fundamental wave representation KB.H*, since the synchron demodulation concentrates only on frequency components near the driving frequency. H* is an amplitude-dependant transfer function and KB the amplitude-dependant gain. (see fig. 7)

$$I(t) = I.\cos\omega t \text{ tranforms into} \qquad B(t) = B.\cos(\omega t - \varphi)$$

with $B=K_B(I).|H^*(I,\omega)|.I$ and $\varphi=\theta_H(I,\omega)+\omega.d(I)$

By simplifying the notation and keeping in mind the amplitude dependancy:

$$B = K_B.H(\omega).I \qquad \varphi = \theta_H(\omega) + \omega.d \qquad \text{d being a group delay} \qquad (3.1.2)$$

An adequate behavioural model for the considered MIF is then obtained by identifying $H(\omega)$ with fig. 4 and $\varphi$ with fig. 5 in the frequency band of interest, the model parameters will slightly depend on the amplitude I.

In case of multiple frequency driving mode, where the current is expressed as $I(t)=I_a.\cos\omega_a t + I_b.\cos\omega_b t....$ the extracted model above still holds if the intermodulation frequencies created by the non-linearity (especially the first harmonics) do not interfere with the fundamental frequencies $\omega_a,\omega_b$... Hence the frequencies must be chosen accordingly.

The model parameters are fitted during the calibration of the flowmeter in presence of all the frequencies with their respective amplitudes. Expressions (3.1.2) still holds, but the different components $K_B,H(.),\theta_H(.),d$ now depend on the global driving amplitude and/or frequency constellation.

Based on previous considerations, following example among many possible solutions of approximation model has proven to be quite efficient in the band 20Hz to 100Hz:

The hysteresis and inherent eddy current effects (for a given amplitude/frequency constellation) are virtually modelized as:

$$h_H(s) = \frac{1}{1+a_H} \cdot \left[ 1 + \frac{a_H}{1 + \frac{s}{\omega_H}} \right] = \frac{1}{1+a_H} \cdot \frac{(1+a_H) + \frac{s}{\omega_H}}{1 + \frac{s}{\omega_H}}$$ (3.1.3)  s is the Laplace index

(3.1.3) is the key component and basically represents the amplitude behaviour of fig. 4 and the constant/non-linear phase characteristic of fig. 5. In following sections 4.2 and 4.3 , it corresponds to amplitude behaviour H(.) and non-linear phase behaviour $\theta_H$(.) of the "hysteresis part" and $a_H, \omega_H$ are the model parameters subject to drift and hence modelize hysteresis and eddy current drift.

A quasi-linear phase term and low-pass characteristic completes the model and is given by:

$$L(s) = \frac{1 - \frac{s}{\omega_A}}{1 + \frac{s}{\omega_A}} \cdot \frac{1}{1 + \frac{s}{\omega_L}}$$ (3.1.4)  with $10\omega_H < \omega_A < \omega_L$

and hence $H^*(s) = h_H(s).L(s)$

A drift in L(s) can be assimilated as group delay drift.

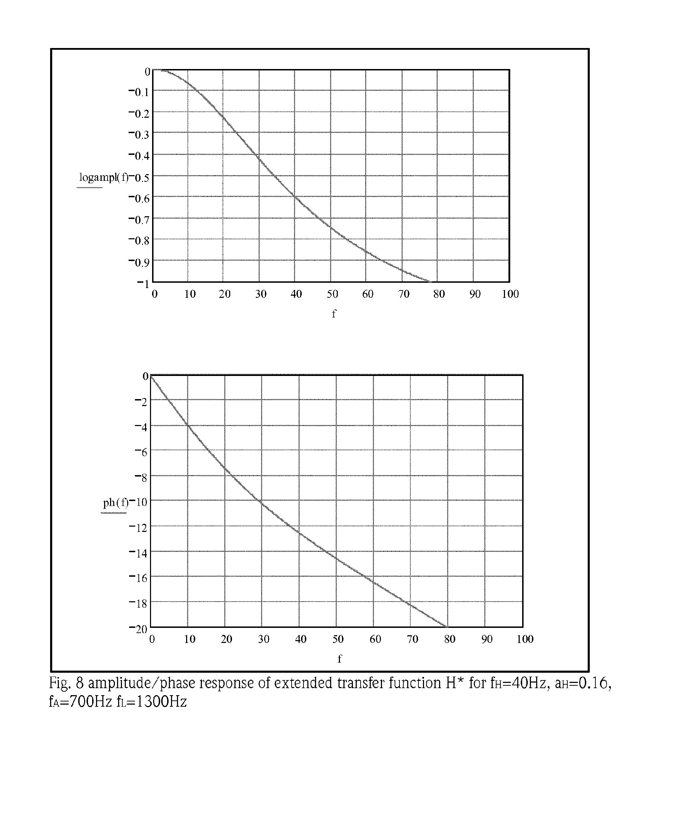

Fig. 8 show an example of typical response of the model; this corresponds to fig. 4 and fig. 5 for frequencies above 20Hz.

Fig. 2 and its related MIF model serves as graphical and theoretical reference.

First, a single frequency sinusoidal current **I** is considered to clarify the principle of AC drive:

$$I(t) = I.\cos \omega t \quad (4.1.1)$$

The amplitude *I* is fixed and maintained constant.

The resulting induction B may then be expressed as:

B(t)=B.cos($\omega t$-$\varphi$)+h(t) (4.1.2) where $B=K_B(I).H(I,\omega).I$ and $\varphi=\varphi_H(I,\omega)$

Here H represents the joint action of L(s) and the hystereris on the fundamental wave and h(t) represents the parasitic bunch of harmonics as well as other perturbations. (see section 3.1)

Keeping in mind the dependancies, we then write:

$$B(t) = K_B.H.I.\cos(\omega t - \varphi_H) + h(t) \quad (4.1.3)$$

Statement (A1): In the frequency band of interest (<150Hz), the elements Gf and Gq are considered as simple delays df and dq (linear phase characteristic circuit) with gains Kf and Kq.

This leads to the orthogonal electrode voltages (see fig. 2):

$$E_f(t) = K_B.I.H.Q.K_f \cos(\omega t - \varphi_H - \omega.d_f) + K_f.h(t - d_f)$$

and

$$E_q(t) = -K_B.I.H.K_q.\omega.\sin(\omega t - \varphi_H - \omega.d_q) + K_q.h(t - d_q)$$

Note that Kq is a critical factor because it represents the geometrical shapes of the pick-up circuit wires and diffuse circuit distribution within the metered medium.

The electrode voltage then writes :

$$U(t) = K_B.I.H.Q.K_f \cos(\omega t - \varphi_H - \omega.d_f) - K_B.I.H.K_q.\omega.\sin(\omega t - \varphi_H - \omega.d_q) + K_q.h(t - d_q) + K_f.h(t - d_f)$$

or more generally:

$$U(t) = K_B.I.H.Q.K_f \cos(\omega t - \varphi_H - \omega.d_f) - K_B.I.H.K_q.\omega.\sin(\omega t - \varphi_H - \omega.d_q) + N(t) \qquad (4.1.4)$$

where N(t) represents a global perturbation term including noise, low frequent electrode polarization, harmonics created by the hysteresis, input/output coupling etc...

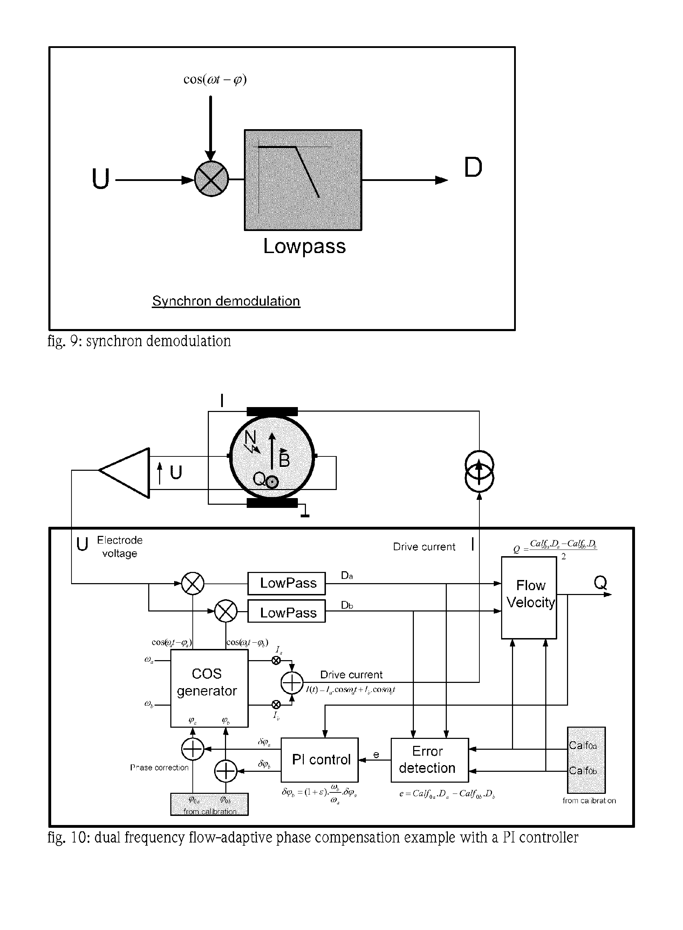

To retreive the flow velocity information Q, the signal U is demodulated by means of a synchron demodulation scheme (see fig. 9): multiplication by $\cos(\omega t-\varphi)$ and subsequent lowpass filtering to eliminate all frequencies $\geq \omega$. In this way the effect of harmonics is eliminated and the fundamental wave approach validated.

By omitting the remaining perturbation components (see section 4.2), after some basic trigonometrics and elimination of higher frequency terms, the demodulated signal becomes:

$$D(t) = \frac{K_B.I.H.Q(t).K_f}{2} \cos(\varphi_H + \omega.d_f - \varphi) + \frac{K_B.I.H.K_q.\omega}{2}.\sin(\varphi_H + \omega.d_q - \varphi) \quad (4.1.5)$$

During the calibration process of the flowmeter, the demodulation phase $\varphi$ is adjusted (with zero flow) to the value $\varphi_0 = \varphi_H + \omega.d_q$ to eliminate the quadrature component, resulting in:

$$D(t) = \frac{K_B.I.H.Q(t).K_f}{2} \cos(\omega.(d_f - d_q))$$

The Calibration factor Calf0 is determined (typically by linear regression) to give

$$Calf0*D(t)=Q(t) \qquad (4.1.6) \qquad ( Calf_0 \equiv \frac{2}{K_B.I.H.K_f.\cos[\omega.(d_f - d_q)]} )$$

This shows the nominal mode of operation of the AC MIF.

But, as may be seen in (4.1.5), if any of $\varphi_H, d_f, d_q$ is subject to a drift $\delta\varphi_H, \delta d_f, \delta d_q$, D becomes:

$$D(t) = \frac{K_B.I.H.Q(t).K_f}{2}\cos[\omega.(d_f - d_q) + \delta\varphi_H + \omega.(\delta l_f - \delta l_q)] + \frac{K_B.I.H.K_q.\omega}{2}.\sin(\delta\varphi_H + \omega.\delta l_q) \qquad (4.1.7)$$

and expression (4.1.6) therefore produces (possibly strong) offset errors without decent possibility for detection and compensation.

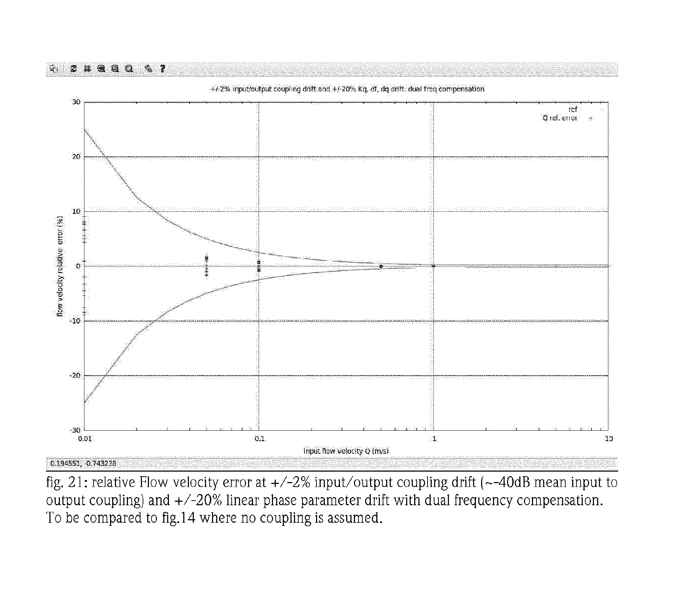

Statement (A0): We omit perturbation signals for the presented auto-zeroing method. This is motivated by the fact that after synchron demodulation, only the spectral perturbation components around the fundamental wave are still active; their effect is either negligible or not explicitly considered in the autozeroing problem (mainly due to parameter drifts). Yet, their presence may degrade the efficiency of the presented autozeroing algorithm, nevertheless, the latter constitutes an optimum solution for the drift compensation. This is for example the case for input/output coupling perturbations and is illustrated on fig.21.

To keep the description as clear as possible, the detailed but basic calculations are not included here but given in a separate document for those interested by a formal proof. Also fig. 10 will help the reader to get an overview of the method.

A double frequency sinusoidal driving mode is considered:

$$I(t) = I_a.\cos\omega_a t + I_b.\cos\omega_b t \quad (4.2.1)$$

The amplitudes $I_a, I_b$ are fixed and maintained constant and $\omega_b = \omega_a + \Delta\omega$; (ideally, $\Delta\omega = \dfrac{\omega_a}{2}$) in order to get a $\dfrac{\Delta\omega}{2}$ non-overlapping bandwidth around each frequency. Additionnally, $\omega_b$ should not be near a first harmonic of $\omega_a$.

A multiple synchron demodulation with each $\cos(\omega_x t - \varphi_x)$ carrier and lowpass filtering to limit the band to $\dfrac{\Delta\omega}{2}$ is achieved for channel x=a and x=b.

The demodulated term for channel x is Dx and is expressed as:

$$D_x(t) = \frac{K_B.I_x.H(\omega_x).Q(t).K_f}{2}\cos[\theta_H(\omega_x) + \omega_x.(d_H + d_f) - \varphi_x] + \frac{K_B.I_x.H(\omega_x).K_q.\omega_x}{2}.\sin[\theta_H(\omega_x) + \omega_x.(d_H + d_q) - \varphi_x]$$

where the different terms are defined in the same manner as in section 4.1. The joint hysteresis phase $\varphi_H$ was split in a linear and non-linear part versus frequency (pointing out the group delay part):

$\varphi_H(\omega_x) = d_H.\omega_x + \theta_H(\omega_x)$ (4.2.2) dH is then the hysteresis group delay

$H(.)$ , $\varphi_H(.)$ as well as $K_B$ depend on the driving amplitude and frequency constellation and are fixed unless they are subject to some environmental drifts.

During the flowmeter initial calibration process, the demodulation phase $\varphi_x$ of each frequency channel is adjusted (with zero flow) so as to obtain Dx=0.

This condition is satisfied for $\varphi_{0x} = \theta_H(\omega_x) + \omega_x.(d_H + d_q)$

Under this circumstance, Dx then reduces to:

$$D_x(t) = \frac{K_B.I_x.H(\omega_x).Q(t).K_f}{2}\cos[\omega_x.(d_f - d_q)] \quad \text{and the calibration factor Calf0x is adjusted to}$$

$$Calf_{0x} \equiv \frac{2}{K_B.I_x.H(\omega_x).K_f.\cos[\omega_x.(d_f - d_q)]} \qquad (4.2.3)$$

The fluid velocity Q is then given by:

$$Q(t) = Calf_{0a}.D_a(t) = Calf_{0b}.D_b(t) = \frac{Calf_{0a}.D_a(t) + Calf_{0b}.D_b(t)}{2} \qquad (4.2.4)$$

Note that the calibration must be performed in presence of both frequencies with the given drive amplitudes and should not be performed separately because of the cross-influence of the hysteresis which is basically non-linear.

We now consider the case of a drift of the different components $H(.),\theta_H(.),d_H,d_f,d_q$: $\delta H(.),\delta\theta_H(.),\delta d_H,\delta d_f,\delta d_q$; this could for instance happen under temperature changes, aging or fluid conductivity fluctuation.

An adequate demodulation phase correction $\delta\varphi_x$ to be applied to the calibrated phase $\varphi_{0x}$ is seeked to counterbalance the drift. This leads to an adaptive demodulation phase $\varphi_x = \varphi_{0x} + \delta\varphi_x$ and if $\delta\varphi_x$ has the correct value (which is equivalent to a recalibration), expression (4.2.4) is still valid to give the flow velocity Q

Some complementary assumptions are made:

Statement (A2): The drifts are small:
Statement (A3): Second order terms are omitted
Statement (A4): $\omega_x.(d_f-d_q)$ is sufficiently small to validate

$$\sin\omega_x.(d_f - d_q) \approx \omega_x.(d_f - d_q) \quad . \, (\frac{\omega_x}{2\pi} < 100Hz, \, df-dq < 100\mu s)$$

The object of the invention is to provide an adaption algorithm to best approach the seeked phase correction value $\delta\varphi_x$ and this, in a continuous way.

We consider both demodulated channels Da, Db and search, using any suitable method, $\delta\varphi_a,\delta\varphi_b$ subject to

$$\delta\varphi_b = \frac{\omega_b}{\omega_a}.\delta\varphi_a \quad \text{(c1) realizing the condition } Calf_{0a}.D_a-Calf_{0b}.D_b=0 \text{ (c2)}$$

It was found that the following holds for this algorithm: In presence of a dual frequency $(\omega_a,\omega_b)$ AC-MIF driving mode, and under the specified statements (A0) to (A4), the phase corrections $\delta\varphi_a,\delta\varphi_b$ delivered by the above algorithm to the synchron demodulators for frequency $\omega_a,\omega_b$, automatically compensate for the linear phase characteristic drifts (delay drifts) and reduces the effect of the non-linear phase characteristic drifts (pure hysteresis drifts and assimilated perturbations). Especially, the transformer effect, associated to the diffuse quadrature gain Kq, is minimized.

In this way, a first level of auto-zero and auto-gain is achieved.

The precision of the system mainly depends on the accuracy of the (A0) to (A4) realization and typically, more than 20% linear phase drifts may be compensated. Possible implementations are given in section 5.1 and fig.10; simulation results are depicted in fig. 13 to fig.18. Also see fig.21

Under certain circumptances, for a given flowmeter structure, the algorithm may slightly be modified by replacing the phase constraint (c1) with $\delta\varphi_b = (1+\varepsilon).\frac{\omega_b}{\omega_a}.\delta\varphi_a$ with $|\varepsilon| \ll 1$ to attain a good compromise in resolving compound drifts.

The maximum flow velocity bandwidth is $\frac{\omega_b - \omega_a}{2}$, this, together with low frequent perturbation elimination requirements, often dictates the choice of both frequencies. Of course, mains frequencies (50Hz or 60Hz) should be avoided.

As in section 4.2, assumptions (A0) to (A4) hold for the following description.

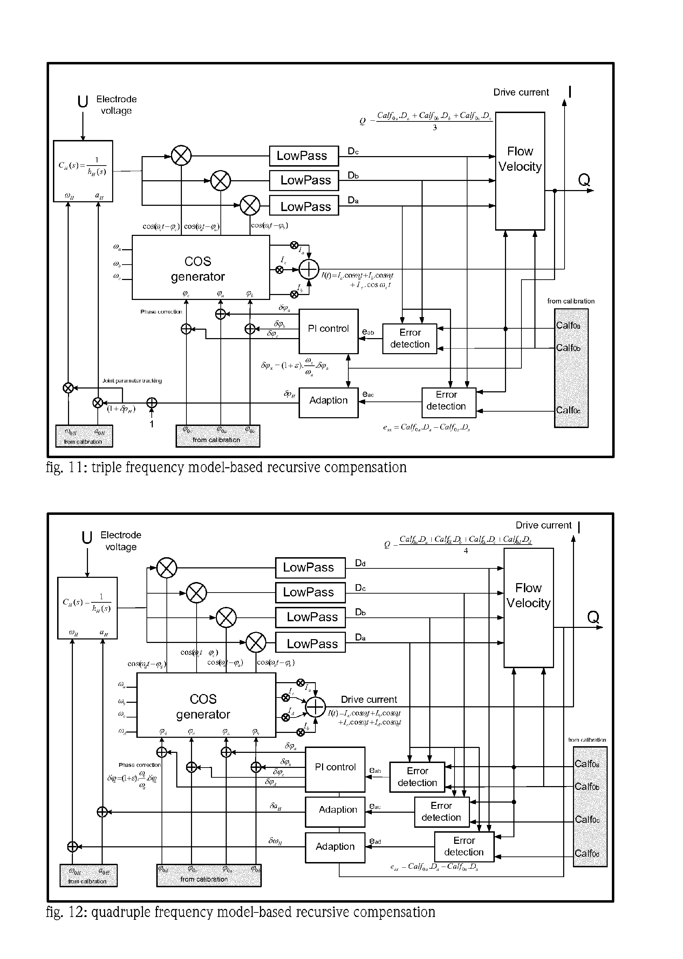

Also fig. 11 and fig. 12 will help the reader to get an overview of the method.

We consider the case of multiple frequency driving mode, where the current is expressed as

$$I(t) = I_a . \cos \omega_a t + I_b . \cos \omega_b t .... = \sum_{x=a,b...} I_x . \cos \omega_x t .$$ The number of frequencies is typically 3 or 4 and they are chosen to have minimum intermodulation to avoid cross-effects, so that the model described in section 3.1 is valid. For example (25Hz, 35Hz, 45Hz, 55Hz) is a decent choice since harmonics and first order differences do not interfere. We keep the formalism of section 4.2. and a synchron demodulation $\cos(\omega_x t - \varphi_x)$ is associated to each frequency.

The system is primarily calibrated giving $(Calf_{0x}, \varphi_{0x})$ pairs for each frequency.

Algorithm of section 4.2 is applied to a pair of frequencies, say $\omega_a, \omega_b$. Hence the corresponding phase corrections

$\delta\varphi_a$ and $\delta\varphi_b = \dfrac{\omega_b}{\omega_a} . \delta\varphi_a$ are provided with $e_{a,b} = Calf_{0a} . D_a - Calf_{0b} . D_b = 0$

As may easily be shown, with any index $x$ and by taking $\delta\varphi_x = \dfrac{\omega_x}{\omega_a} . \delta\varphi_a$ as demodulation correction, in case of no hysteresis drift, the expression of $e_{a,x} = Calf_{0a} . D_a - Calf_{0x} . D_x$ vanishes.

That is, if $e_{a,b} = Calf_{0a} . D_a - Calf_{0b} . D_b = 0$ under the dual frequency adaptive algorithm, then, in presence of linear phase drifts only, $e_{a,x} = Calf_{0a} . D_a - Calf_{0x} . D_x = 0$ (under demodulation with $\delta\varphi_x = \dfrac{\omega_x}{\omega_a} . \delta\varphi_a$ ) for any other frequency $\omega_x$.

As soon as hysteresis drifts (or any other no-linear phase drifts) occur, this quantity will be different from 0 ($e_{a,x} \neq 0$) and it becomes a measure of the related errors; additionnally if $y \neq x$ then $e_{a,x} \neq e_{a,y}$. In this way, hysteresis drift or more generally non-linear phase drifts, may be detected and quantified. Also advanced diagnostics on localization of drifts or aging deteriorations are feasible by evaluating $e_{a,x}$.

As a consequence, $e_{a,x}$ (for $x \neq a,b$) may be used as error detection for a non-linear phase drift compensation circuit. The required number of frequencies $x \neq a,b$ is the degree of freedom (dof) of the used compensation circuit.

As an illustration of this principle, we take the hysteresis and eddy current model $h_H(s)$ depicted in section 3.1 where $a_H, \omega_H$ (dof=2) are the model parameters subject to drift and use its reverse $\dfrac{1}{h_H(s)}$ as model-based compensation circuitry directly applied on the electrode voltage U.

If the non-linear phase is sufficiently compensated by this model-based method, only linear phase drift will subsist and the subsequent dual frequency algorithm will do the rest of the job.

The initial model parameters $a_{0H}, \omega_{0H}$ are determined during the calibration phase of the flowmeter. (see section 5.2)

Fig. 10 shows a practical recursive implementation of the dual frequency auto-zeroing method.

Other implementations like the ones using forward compensation are also possible. It concentrates on the presented algorithm and does not show other associated circuitry like for instance drive current regulation or advanced filtering methods.

A cosinus generator receives the two frequencies ($\omega_a, \omega_b$) as well as the pair of amplitudes ($I_a, I_b$) as fixed parameters. The signals for the drive circuitry are generated as well as the mixing signals with adapted demodulation phases ($\varphi_a, \varphi_b$).

The synchron demodulation produces baseband signals ($D_a, D_b$).

On one hand the auto-zeroing phase correction is achieved by the Error detector and a PI controller which tunes the phase correction ($\delta\varphi_a, \delta\varphi_b$) so as to obtain $e = Calf_{0a} . D_a - Calf_{0b} . D_b = 0$.

On the other hand, the flow velocity output Q is supplied by the Flow Velocity block which computes

$$Q = \frac{Calf_{0a} . D_a + Calf_{0b} . D_b}{2}$$ according to the presented algorithm. As stated, additionnal algorithms or signal manipulations may be used to calculate the final flow velocity; here we concentrate on zero point stabilization.

Note that the phase correction depends on the instantaneous flow value Q; in that sense it is flow-adaptive. Therefore the dynamics of the PI controller must be tuned to optimally cope with the flow velocity allocated bandwidth $\dfrac{\Delta\omega}{2}$. It will also be clear to those people skilled in the matter, that other adaption algorithms than PI controllers are possible.

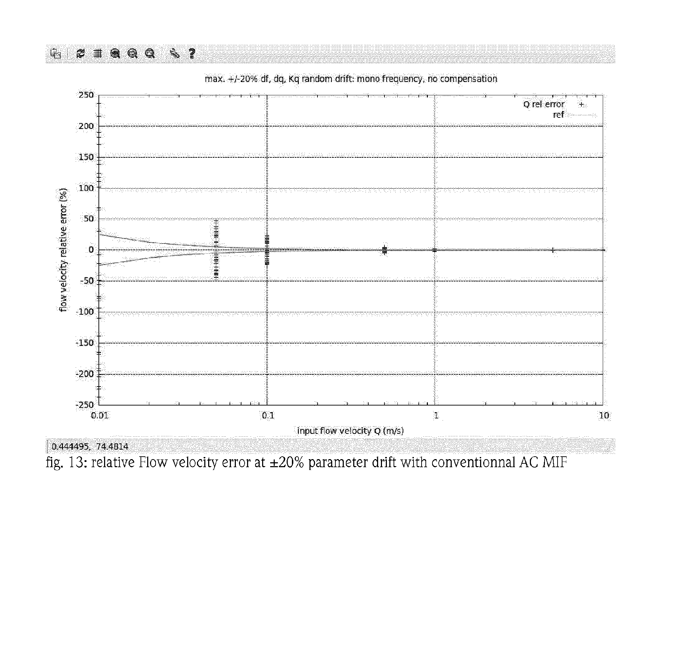

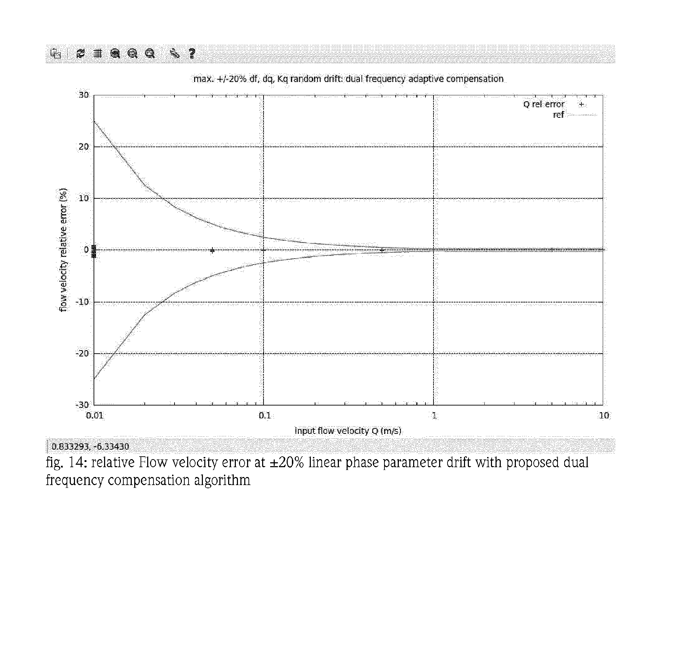

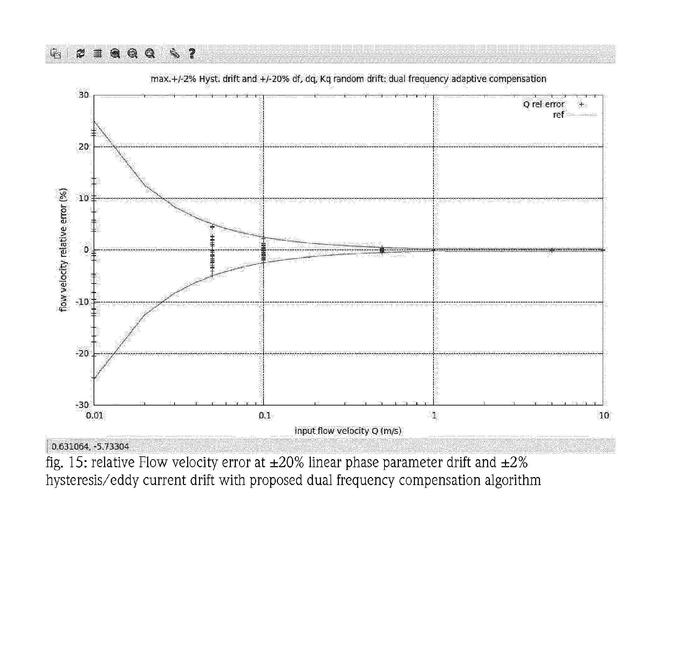

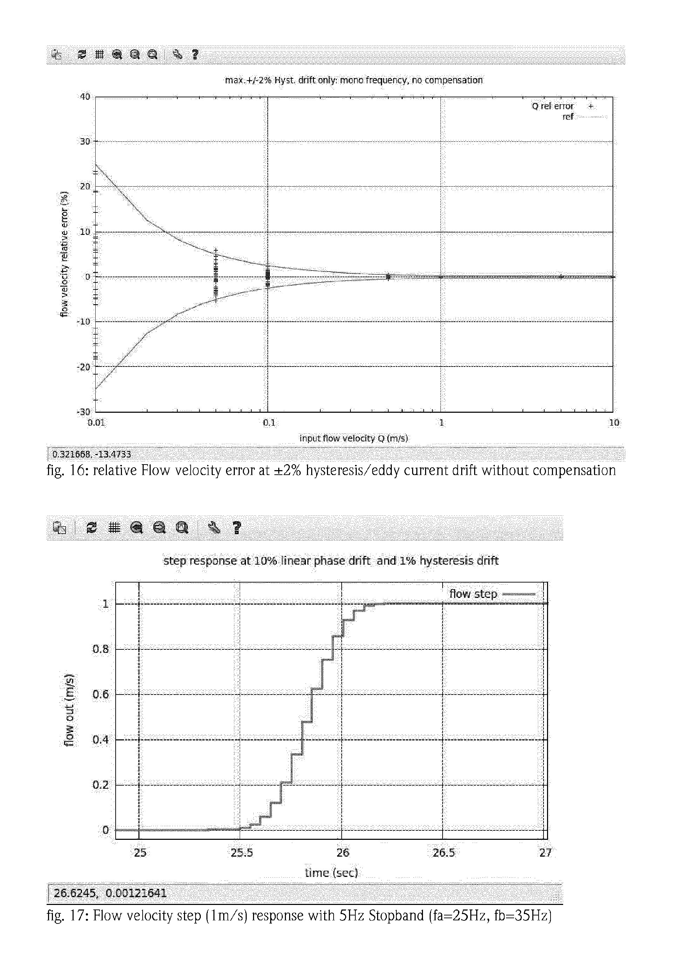

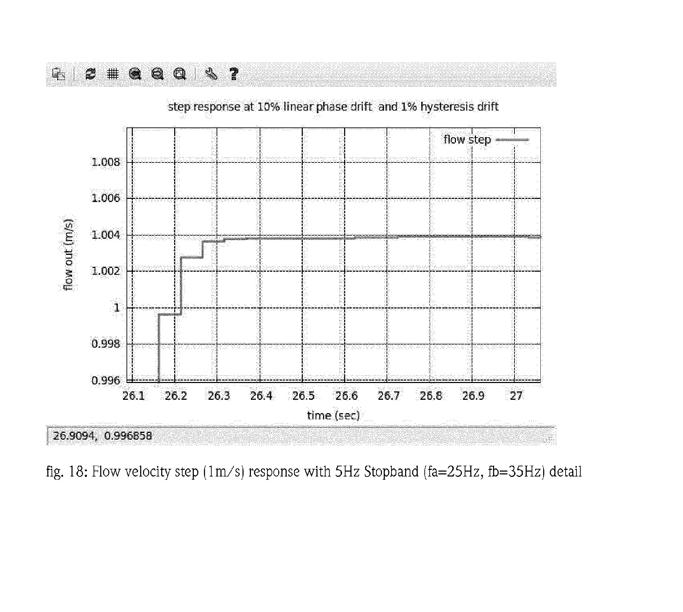

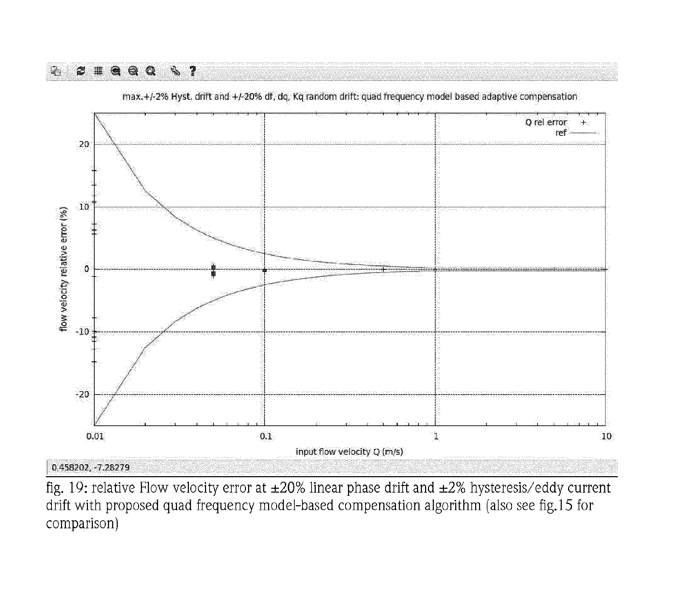

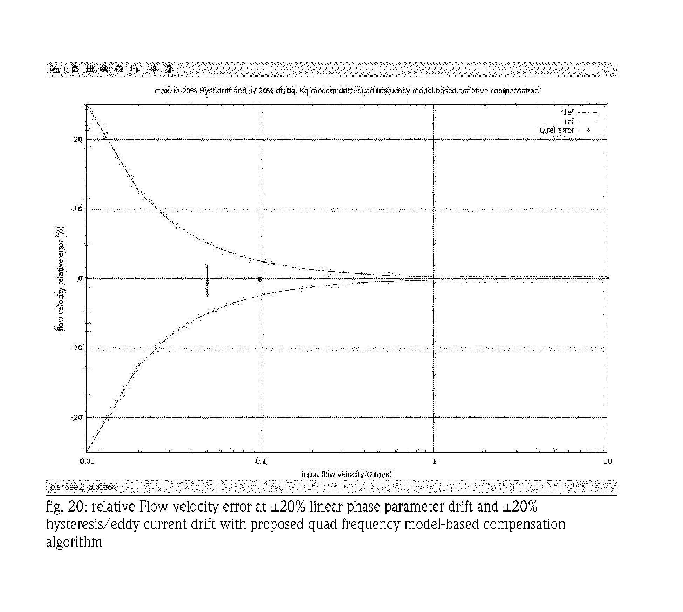

Simulation results based on the presented structure are given in fig. 13 to fig.18 and confirm the properties of the dual frequency flow adaptive zero compensation announced in section 4.2.

Fig. 11 shows the enhanced system arrangement with 3 frequencies and fig. 12 shows the enhanced system arrangement with 4 frequencies.

As stated in section 4.3, the non-linear phase compensation circuit is directly applied to the incoming electrode voltage U of the sense amplifier. Note that other possible circuits applying to signal U, like for example spike suppressors, are not depicted here.

The virtual transfer function of the compensation circuit is: (also see section 3.1)

$$C_H(s) = (1 + a_H) . \frac{1 + \dfrac{s}{\omega_H}}{(1 + a_H) + \dfrac{s}{\omega_H}} = \frac{1}{h_H(s)}$$

The tracked model parameter are $a_H, \omega_H$. They are tuned by means of two Adaption circuits each using the quantity $e_{a,x}$ (for $x \neq a,b$) defined in section 4.3 as error signal. This parameter tracking may be achieved with adaptive PI controllers. These would only be active when the measured flow velocity Q is less than a critical value and frozen otherwise.

The model parameters are inherently independant of the velocity Q as well as of the signal stream, their adaption can therefore be very slow. More sophisticated identification techniques like LMS are also possible but these are, in general, more resource consuming.

The initial model parameters $a_{0H}, \omega_{0H}$ are determined either during the calibration of the flowmeter or simply determined once for a given flowmeter structure. They have the correct value when, ideally, all the calibrated demodulation phases are linear versus frequency: $\varphi_{0x} = \dfrac{\omega_x}{\omega_a} . \varphi_{0a}$ · In practice, this can only be approached, for example by using minimization techniques.(LMS, L1-norm...)

In the triple frequency version, the degree of freedom is restricted to 1 by stating a coupled variation of both parameters $a_H, \omega_H$. This restriction, of course, leads to a poorer phase compensation.

Depending on the required quality, 1 or 2 additionnal frequencies are associated to the dual mode, giving the triple resp. quad mode for the compensation process.

In this way, a second and third level of auto-zero and auto-gain may be achieved.

The compensation circuit is $C_H(s) = \dfrac{1}{h_H(s)}$ and its output is further compensated for the remaining linear phase drifts by the embedded dual frequency algorithm which adjusts the demodulation phase.

**Claims**

1.  An AC-driven electromagnetic flow meter having at least one field generating coil and potential sensing electrodes, wherein the AC-driven electromagnetic flow meter comprises control device adapted to drive the AC-driven electromagnetic flow meter with a multiple frequency driving system for driving of the field generating coil.

2.  An AC-driven electromagnetic flow meter according to claim 1, wherein the multiple frequency driving system is adapted for driving of the field generating coil with at least two currents with two different frequencies simultaneously.

3.  An AC-driven electromagnetic flow meter according to claim 1 or 2, wherein the AC-driven electromagnetic flow meter comprises at least two operation modes for driving the field generating coil:

    a) A single frequency driving mode, wherein the flow meter is driven with a first single frequency sinusoidal current I(t)=I.cos(ωt) and
    b) A multi-frequency mode, preferably a dual-frequency mode, wherein the flow meter is driven with at least two frequency sinusoidal currents $I_a$, $I_b$, wherein the frequency $\omega_a$ of the first of the at least two currents is not equal to the frequency $\omega_B$ of the second of the at least two currents.

4.  An AC-driven electromagnetic flow meter according to claim 3, wherein at least one of the frequencies in the single frequency driving mode or in the multi frequency driving mode has a frequency band of at least 150 Hz.

5.  An AC-driven electromagnetic flow meter according to one of the aforementioned claims, wherein the AC-driven electromagnetic flow meter comprises a lowpass filter for the elimination of all frequencies $\geq w$, when the flow meter is driven in a single frequency driving mode.

6.  An AC-driven electromagnetic flow meter according to claim 3, wherein the AC-driven electromagnetic flow meter comprises a control device for the synchron demodulation of the signal U by multiplication of $\cos(\omega t - \varphi)$, wherein $\varphi$ represents the phase of the current I(t) in the single frequency driving mode.

7.  A method for operating an AC-driven electromagnetic flow meter, having at least one field generating coil and potential sensing electrodes, wherein the method comprises at least a calibration for the determination of linear phase drifts by operating the coil with at least two currents with two different frequencies simultaneously.

8.  A method according to claim 7, wherein the calibration is a continuous calibration during a flow-measurement.

9.  A method according to claim 7 or 8, wherein the method comprises a compensation for non-linear phase-drift, wherein this compensation comprises

    a) providing a database comprising different sets of data representing different modelized operating situations;
    b) determining of at least one a signal representing the flow-velocity and/or the mass or volume flow of a medium in a pipe section; and
    c) comparing the signal with at least one set of data and continuous compensation of the signal.

10. A method according to claim 9, wherein the model parameters are continuously evaluated and an associated inverse model is applied to compensate non-linear phase drifts the at least one signal representing the flow-velocity and/or the mass or volume flow of a medium in a pipe section.

11. A method according to one of the aforementioned claims, wherein at least linear phase drifts are compensated by this method.

12. A method according to one of the aforementioned claims, wherein the method is performed with an AC-driven electromagnetic flow meter according to one of the claims 1-6.

fig. 1: cross-sectionnal view of a typical magneto-inductive flowmeter

fig. 2: behavioural block diagram of a MIF driven with a current source

fig. 3: I/B hysteresis example

fig. 4: measured phase response with 85mA and 40mA driving current with an E+H magmeter DN50

12

48.9571, -0.351190

fig. 5: measured amplitude response with 85mA and 40mA driving current with an E+H magmeter DN50

413.451, -57.1697

fig. 6: DFT of flux density B (vertical:level dB, horizontal: frequency Hz)

Hysteresis/eddy currents

Fundamental wave model

Hysteresis/eddy currents

fig. 7: fundamental wave representation

Fig. 8 amplitude/phase response of extended transfer function H* for $f_H$=40Hz, $a_H$=0.16, $f_A$=700Hz $f_L$=1300Hz

fig. 9: synchron demodulation

fig. 10: dual frequency flow-adaptive phase compensation example with a PI controller

fig. 11: triple frequency model-based recursive compensation

fig. 12: quadruple frequency model-based recursive compensation

fig. 13: relative Flow velocity error at ±20% parameter drift with conventionnal AC MIF

fig. 14: relative Flow velocity error at ±20% linear phase parameter drift with proposed dual frequency compensation algorithm

fig. 15: relative Flow velocity error at ±20% linear phase parameter drift and ±2% hysteresis/eddy current drift with proposed dual frequency compensation algorithm

fig. 16: relative Flow velocity error at ±2% hysteresis/eddy current drift without compensation

fig. 17: Flow velocity step (1m/s) response with 5Hz Stopband (fa=25Hz, fb=35Hz)

fig. 18: Flow velocity step (1m/s) response with 5Hz Stopband (fa=25Hz, fb=35Hz) detail

fig. 19: relative Flow velocity error at ±20% linear phase drift and ±2% hysteresis/eddy current drift with proposed quad frequency model-based compensation algorithm (also see fig.15 for comparison)

**EP 2 735 852 A1**

fig. 20: relative Flow velocity error at ±20% linear phase parameter drift and ±20% hysteresis/eddy current drift with proposed quad frequency model-based compensation algorithm

24

fig. 21: relative Flow velocity error at +/-2% input/output coupling drift (~-40dB mean input to output coupling) and +/-20% linear phase parameter drift with dual frequency compensation. To be compared to fig.14 where no coupling is assumed.

| | Europäisches Patentamt European Patent Office Office européen des brevets | **EUROPEAN SEARCH REPORT** | Application Number EP 12 19 4283 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/056306 A1 (YAMAMOTO TOMOSHIGE [JP]) 10 March 2011 (2011-03-10) * paragraphs [0016], [0110], [0155] - [0177]; claims 6,7; figures 16,18 * ----- | 1-12 | INV. G01F25/00 G01F1/58 G01F1/60 |
| X | US 2003/029250 A1 (KEECH RAY [GB] ET AL) 13 February 2003 (2003-02-13) * paragraphs [0034] - [0048]; figures * ----- | 1,5 | |
| X | GB 2 400 914 A (ABB LTD [GB]) 27 October 2004 (2004-10-27) | 1,2 | |
| A | * page 9, paragraph 2 - page 21, last paragraph; figures * ----- | 5 | |

| | TECHNICAL FIELDS SEARCHED (IPC) |
| | G01F |

The present search report has been drawn up for all claims

| Place of search | Date of completion of the search | Examiner |
|---|---|---|
| Munich | 22 March 2013 | Politsch, Erich |

**ANNEX TO THE EUROPEAN SEARCH REPORT
ON EUROPEAN PATENT APPLICATION NO.**

EP 12 19 4283

This annex lists the patent family members relating to the patent documents cited in the above-mentioned European search report.
The members are as contained in the European Patent Office EDP file on
The European Patent Office is in no way liable for these particulars which are merely given for the purpose of information.

22-03-2013

| Patent document cited in search report | | Publication date | Patent family member(s) | | Publication date |
|---|---|---|---|---|---|
| US 2011056306 | A1 | 10-03-2011 | CN | 102012245 A | 13-04-2011 |
| | | | JP | 2011053178 A | 17-03-2011 |
| | | | US | 2011056306 A1 | 10-03-2011 |
| US 2003029250 | A1 | 13-02-2003 | GB | 2380797 A | 16-04-2003 |
| | | | US | 2003029250 A1 | 13-02-2003 |
| GB 2400914 | A | 27-10-2004 | GB | 2400179 A | 06-10-2004 |
| | | | GB | 2400441 A | 13-10-2004 |
| | | | GB | 2400914 A | 27-10-2004 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 6962087 B